# EUROPEAN PATENT APPLICATION

(11) **EP 4 822 585 A1**
(43) Date of publication of application: **14.10.2026**
(21) Application number: 26168619.0
(22) Date of filing: 27.03.2026
(51) Int. Cl.: G06F 30/3947

(54) **METODO PER DETERMINARE UNO SCHEMA DI COLLEGAMENTO ELETTRICO DI UN VEICOLO**

(30) Priority: 09.04.2025 IT 202500007806
(71) Applicant: Iveco S.p.A., 10156 Torino (IT)
(72) Inventor: SANTARELLI, Livio, 10156 TORINO (IT)
(74) Representative: Studio Torta S.p.A.

(57) **Abstract**

The method according to the present invention is for determining an electrical wiring diagram of a vehicle. The method comprises: receiving (S1) component data indicative of one or more electrical specifications of a first electrical component (30, 31, 39, 39') to be integrated into a current electrical wiring diagram (20) of the vehicle; and executing (S2) a connection algorithm from the component data and current connection data indicative of the current electrical wiring diagram. The connection algorithm is configured to determine an electrical wiring diagram (20') of the vehicle comprising the first electrical component integrated into the current electrical wiring diagram based on electrical specifications of the first electrical component and the current electrical wiring diagram (20) .

## Description

### CROSS-REFERENCE TO RELATED APPLICATIONS

This patent application claims priority from Italian patent application no. 102025000007806 filed on April 9, 2025, the entire disclosure of which is incorporated herein by reference.

### TECHNICAL FIELD

The present invention relates to a method for determining an electrical wiring diagram of a vehicle.

In particular, the invention is preferably, but not limitedly, applied to land vehicles for transporting people and/or goods, such as for example (light or heavy) commercial vehicles, trucks, means of public transport (buses, etc.).

### STATE OF THE PRIOR ART

As is known, a vehicle provides for the integration of a plurality of electrical components useful for the operation of the vehicle, such as for example control units, vehicle management units (VMUs), sensors, human-machine interfaces (e.g. screens), antennas, etc.

The electrical components must be correctly interconnected with one another from an electrical point of view, both for enabling the supply thereof (which can be provided for example by a battery of the vehicle) and for enabling a correct data exchange with one another, depending on the type of component.

In such regard, it is known to schematically represent the vehicle by means of an electrical wiring diagram in which both the electrical components integrated into the vehicle and the electrical connections between the components integrated into the vehicle are shown by means of specific symbols.

The electrical wiring diagram of the vehicle is useful not only while designing the vehicle, but also during the assembly and the maintenance of the vehicle.

It is known to determine the electrical wiring diagram, and in particular the respective interconnections, in a manual manner.

However, such activity is very time-consuming, due to the time spent on finding the technical information of the various electrical components to be integrated into the vehicle, choosing how to connect the various electrical components to one another and drawing the interconnection lines.

Furthermore, the choice of the components to be connected to one another and the respective interconnections is an activity that requires high concentration and can be subject to errors, for example due to forgetfulness or negligence of the operator.

Errors in the creation of the electrical wiring diagram can have even serious consequences, such as for example malfunctions, errors during the assembly of the vehicle, or delays in the diagnosis during the maintenance of the vehicle.

The need is thus felt to provide a method for determining an electrical wiring diagram of a vehicle which satisfies the aforementioned needs in an optimized and cost-effective manner.

The object of the present invention is to satisfy the needs set forth above.

### SUMMARY OF THE INVENTION

The aforementioned object is achieved by a method for determining an electrical wiring diagram of a vehicle, a processing system which implements the method, a computer program and a method for manufacturing an electrical system of a vehicle, as claimed in the appended claims.

### BRIEF DESCRIPTION OF THE DRAWINGS

In order to better understand the present invention, preferred embodiments are described in the following by way of non-limiting example and with reference to the accompanying drawings wherein:
- Figure 1 shows a block diagram of a processing system according to an embodiment;
- Figure 2 shows a flow chart of a method for determining an electrical wiring diagram of a vehicle, according to an embodiment;
- Figures 3A and 3B show an example of electrical wiring diagram of a vehicle before and after the integration of a new electrical component by means of the method of Figure 2, respectively;
- Figure 4 shows a detailed flow diagram of a step of the method of Figure 2, according to an embodiment;
- Figure 5 shows an exemplifying schematic representation of the integration of an electrical component by means of the method of Figure 2, according to an embodiment; and
- Figures 6A and 6B show an exemplifying schematic representation of the integration of an electrical component by means of the method of Figure 2, according to a different embodiment.

### DETAILED DESCRIPTION OF THE INVENTION

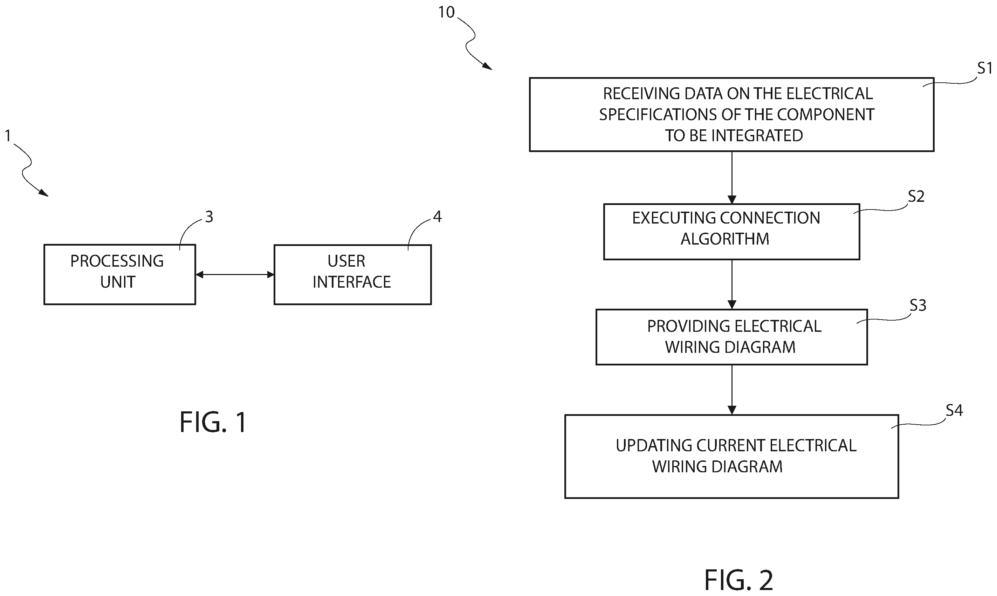

Figure 1 shows a processing system 1 comprising a processing unit 3 and a user interface 4, operatively coupled to each other.

The processing unit 3 can comprise one or more processors, memories, processing modules and the like, for example of the centralized or distributed type depending on the specific implementation.

The user interface 4 can comprise one or more input and/or output devices for enabling an interaction with a user or operator.

The system 1 is configured to perform a method, indicated by 10 in Figure 2, for determining (i.e. for generating, providing or updating) an electrical wiring diagram of a vehicle which incorporates a new electrical component to be integrated into the vehicle.

In detail, the electrical wiring diagram can be the electrical wiring diagram of an electrical system of the vehicle, i.e. of the electrical system which is to be incorporated into the vehicle during the manufacturing of the vehicle.

The method 10 can be utilized during the design of the vehicle.

The electrical component to be integrated, in the following simply indicated as component or component to be integrated, can be a device (electrical or electronic) such as for example a sensor, a control unit, a vehicle management unit, an input and/or output device, an antenna, a receiver, or any other component useful for the operation of the vehicle and which is to be integrated into the electrical system of the vehicle.

The vehicle can preferably be a land vehicle for transporting goods and/or people, such as for example a (light or heavy) commercial vehicle, a truck, a means of public transport (bus, etc.) or the like.

In detail, at a step S1, the system 1 receives component data indicative of the electrical specifications of the electrical component to be integrated.

The component data can be provided by a user or operator by means of the user interface 4.

The component data can preferably comprise one or more data sheets of the component to be integrated.

In detail, the component data can indicate one or more of: a list of (input and/or output) pins each with the respective function, for example supply, ground, data exchange and the like; and values indicative of the operating voltages and/or currents of the component, for example a supply voltage necessary for the operation of the component, a maximum working current or a maximum working voltage, and the like.

Additionally, the component data can also indicate one or more components to which the component to be integrated is to be connected. For example, the component data can indicate that the component to be integrated is to be connected to a supply source (for example a battery) and/or a control unit of the vehicle.

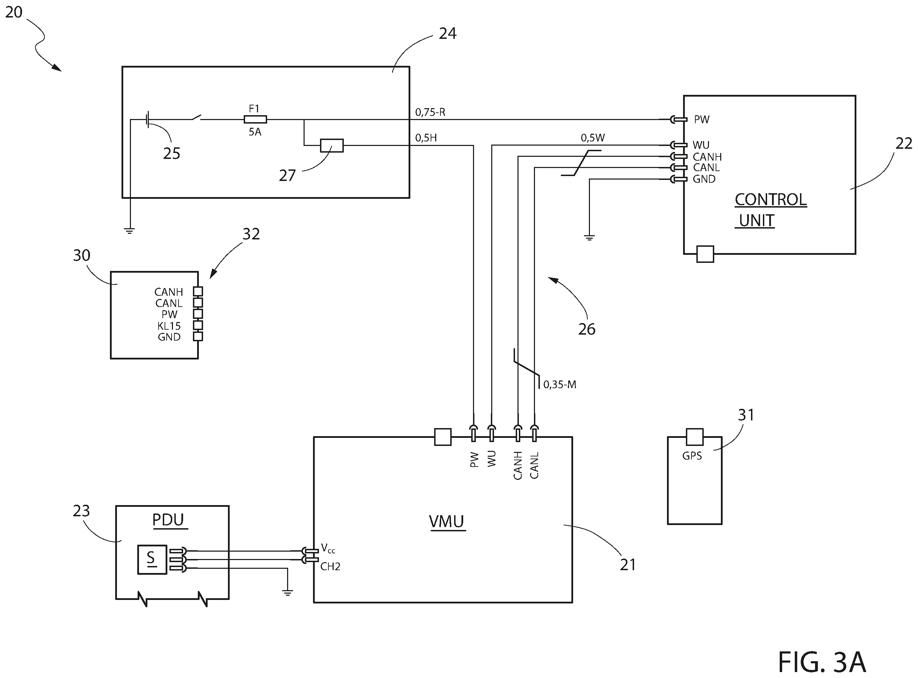

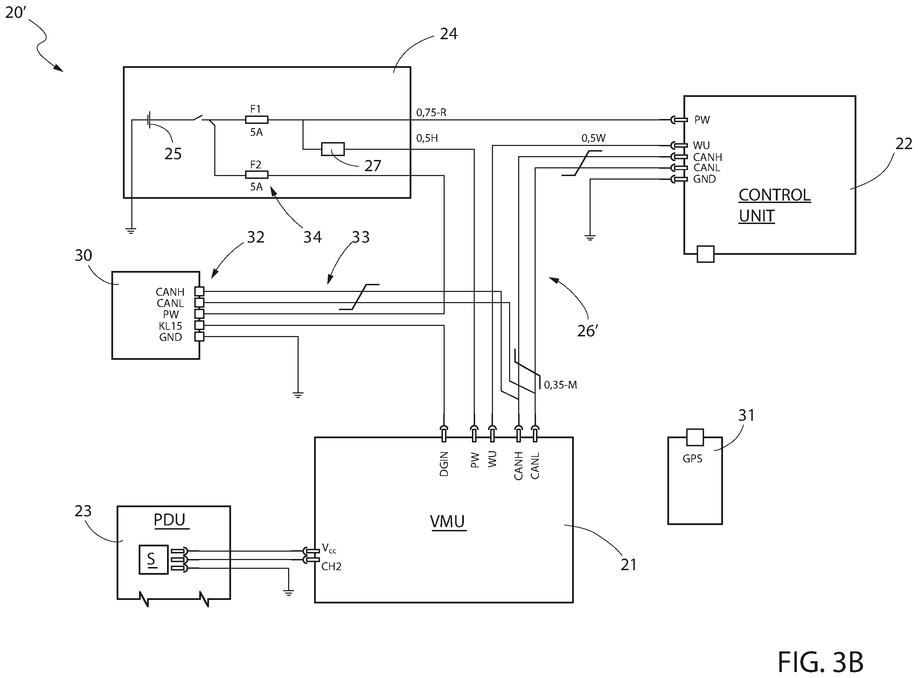

By way of mere exemplifying example, in the following the integration of a new component according to the present method will be described with reference to Figures 3A, 3B.

Figure 3A shows an example of an electrical wiring diagram 20 comprising a vehicle management unit (VMU) 21, a control unit 22, a power distribution unit (PDU) 23 and a supply unit 24 comprising a battery 25, for which the respective interconnections have already been previously determined.

The electrical components 21-24 have already been integrated into the electrical diagram and mutually interconnected.

Figure 3A shows, in a schematic and exemplifying manner, the connection lines, collectively indicated by 26, which couple from an electrical point of view the pins of the units 21-24 to one another.

The connection lines 26 also comprise, by way of example, a fuse F1 arranged between the battery 25 and the control unit 22; and a power (or voltage) conversion device 27 arranged between the fuse F1 and the VMU 21.

By way of example, the connection lines 26 also connect the pins of a current sensor S of the PDU 23 with respective pins of the VMU 21, in particular with a supply pin VCC and a data exchange pin CH2, and with the ground GND.

The electrical wiring diagram 20 represents the current electrical diagram of the vehicle, i.e. the current electrical wiring diagram as resulting from previous design steps or iterations in which the components 21-24 have already been integrated.

Figure 3A further shows two new electrical components, in the specific example a human-machine interface 30 (e.g. a display) and an antenna 31, which is desired to be integrated into the electrical diagram 20; i.e. two new components for which it is desired to determine the respective interconnection lines with the other electrical components 21-24 already interconnected.

In detail, of the interconnections 26, the current electrical wiring diagram 20 also indicates one or more physical or electrical parameters of the interconnections, such as for example dimensions, electrical resistance, etc. For example, for each connection line 26 an alphanumeric code can be indicated in which the numeric portion can indicate the section, for example in millimeters, of the wire and the literal portion can indicate the type, for example a color, of the wire.

In practice, the electrical wiring diagram 20 is the current electrical wiring diagram of the vehicle, which it is desired to update with the integration of the new electrical components 30, 31.

With reference to the example in Figure 3A, at step S1 in Figure 1, the component data indicative of the electrical specifications of the HMI device 30 are received, for example data relative to the list and respective function of the four pins 32 represented in Figure 3A and data relative to the working voltages/currents of the HMI device 30.

In the specific example of Figure 3A, the pins 32 comprise: two pins (CANH and CANL) for the connection to a data bus (in particular here a CAN-type bus) of the vehicle; a pin for receiving the power supply (PW); a pin for the accessory power (KL15); and a pin for the ground connection (GND).

Subsequently, step S2 of Figure 2, the system 1 executes a connection algorithm which is configured to determine an electrical wiring diagram of the vehicle which integrates the new component to be integrated.

In other words, the connection algorithm is configured to generate an updated electrical wiring diagram of the vehicle, also integrating the new electrical component.

The connection algorithm is configured to determine at the output the updated electrical wiring diagram based on the electrical specifications of the new component (i.e., starting from the respective component data) and based on the current electrical wiring diagram of the vehicle.

The connection algorithm can comprise one or more modules, depending on the specific application and implementation. For example, the connection algorithm can comprise one or more of: deterministic models and machine learning or artificial intelligence models suitably trained by an operator in a supervised manner, from known examples of components to be integrated and electrical wiring diagrams.

In detail, the connection algorithm is configured to determine the interconnections between the new electrical component to be integrated and the electrical components already integrated into the current electrical diagram.

In particular, the connection algorithm can provide output data which, for each pin of the new component to be integrated, are representative of one or more of:
- type of connector to be utilized for the connection;
- destination pin, i.e. the pin of one or more of the components already integrated into the current electrical diagram to be connected to; and
- characteristics of the connection line, such as for example resistance, length, dimension (e.g. diameter), possible devices integrated into it (e.g. fuses, etc.).

With reference to the example of Figure 3A, the connection algorithm determines the interconnections between the HMI device 30 and one or more of the other components 21-24 integrated into the current electrical wiring diagram 20, from the component data received at step S1 and the current electrical wiring diagram 20.

The current electrical wiring diagram 20 can be stored in the processing unit 3, for example in a dedicated memory, and retrieved before step S2. In such case, the method 10 in Figure 2 can comprise a further step in which current connection data indicative of the current electrical wiring diagram 20 are received.

Alternatively, the current connection data can be incorporated directly into a model at the basis of the connection algorithm, depending on the specific implementation of the connection algorithm.

For example, the current connection data can be representative of one or more of: a list of the electrical components already integrated in the current electrical diagram (i.e., with reference to the current diagram 20 in Figure 3A, the list of the components 21-24); the interconnections 26 between the pins of the components 21-24; the topology of the interconnections 26; working voltages of the components 21-24; working currents of the components 21-24.

For example, the current connection data can be stored in one or more look-up tables.

The connection algorithm can be further configured to determine the electrical wiring diagram also based on a set of connection rules, which can be established by a user (or operator) during the programming or definition of the connection algorithm, indicative of one or more electrical requirements. Such electrical requirements can be representative of the electrical compatibility between two components, for example depend on the difference between the respective operating voltages and/or currents (supply voltage, maximum current, etc.), or on specific safety regulations or standards.

The output data of the connection algorithm are thus indicative of the new electrical wiring diagram of the vehicle, now also incorporating the new component.

With reference to the example of Figure 3A, the new electrical wiring diagram is indicated by 20' in Figure 3B and integrates the HMI device 30, suitably interconnected with the components 21-24.

The output data can be representative, for each pin of the HMI device 30, of the respective pin of the other components 21-24 connected thereto and of the electrical specifications of the respective interconnection line.

In fact, as is shown in Figure 3B, the interconnections, now indicated by 26', also include the lines 33 for the interconnection of the new device 30.

In particular, the new electrical wiring diagram 20' in Figure 3B now comprises, in the interconnection line 33 that supplies the HMI device 30, also a fuse 34.

The output data can be stored in a memory of the system 1 and/or provided to the user (step S3 in Figure 2), for example by means of the user interface 4.

The output data can be provided to the user in written form (for example one or more tables) and/or in graphical form.

In particular, the connection algorithm can also be configured to generate, in the user interface 4, a graphical representation of the new electrical wiring diagram resulting from step S2, so that it is readable and, preferably also modifiable, manually by an operator. For example, such graphical representation can be the graphical representation shown in Figure 3B.

The connection algorithm can be based on known graphical representation models such as for example the Matplotlib, Graphviz libraries or other known electrical circuit representation tools.

Preferably, the connection algorithm can be configured to generate a graphical representation in which the information contained in the output data is visible; for example, for each pin of the integrated component, length and dimension of the respective connection lines, respective destination pins, type of connector, maximum current of a fuse and anything else inferable by a person skilled in the art from the symbolic representations of Figures 3A and 3B.

Furthermore, the connection algorithm can be configured to graphically represent the electrical wiring diagram so that each connection line is of a respective color as a function of the type of connection line (for example, low voltage line, high voltage line, data exchange line, supply line, etc.).

Again with reference to Figure 2, at a step S4, the system 1 updates the current electrical wiring diagram, in response to the integration of the new component integrated at step S2.

In detail, the wiring diagram generated by the connection algorithm at step S3 becomes the new current wiring diagram that can be utilized in subsequent iterations of the method 20 for the integration of further electrical components.

With reference to the example in Figures 3A, 3B, the electrical wiring diagram 20', which now also integrates the HMI device 30, becomes the current wiring diagram on the basis of which a new electrical wiring diagram which also integrates the antenna 31 can be determined.

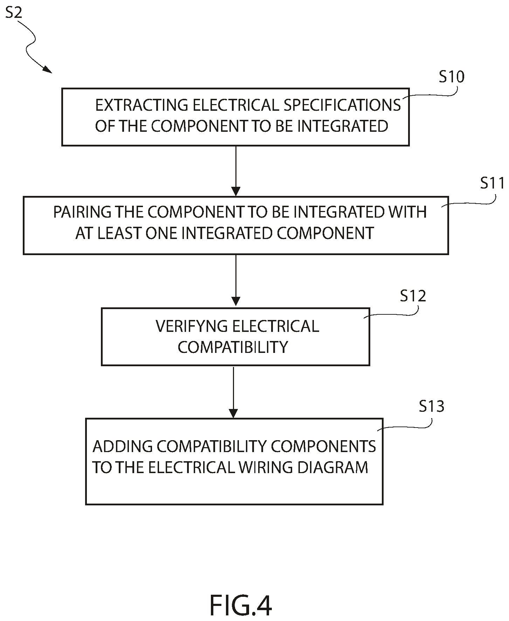

Figure 4 shows a detailed flow chart of step S2 of Figure 2, according to an embodiment of the connection algorithm.

In detail, the component data can comprise one or more data sheets of the new component to be integrated and the connection algorithm can be configured, step S10, to extract the electrical specifications (as defined with reference to the component data for step S1 of Figure 2) of the new component to be integrated from said data sheets. Extracting the technical specifications directly from the data sheets can enable quickening and optimizing the present method for determining the electrical wiring diagram integrating the new electrical component into the current electrical wiring diagram.

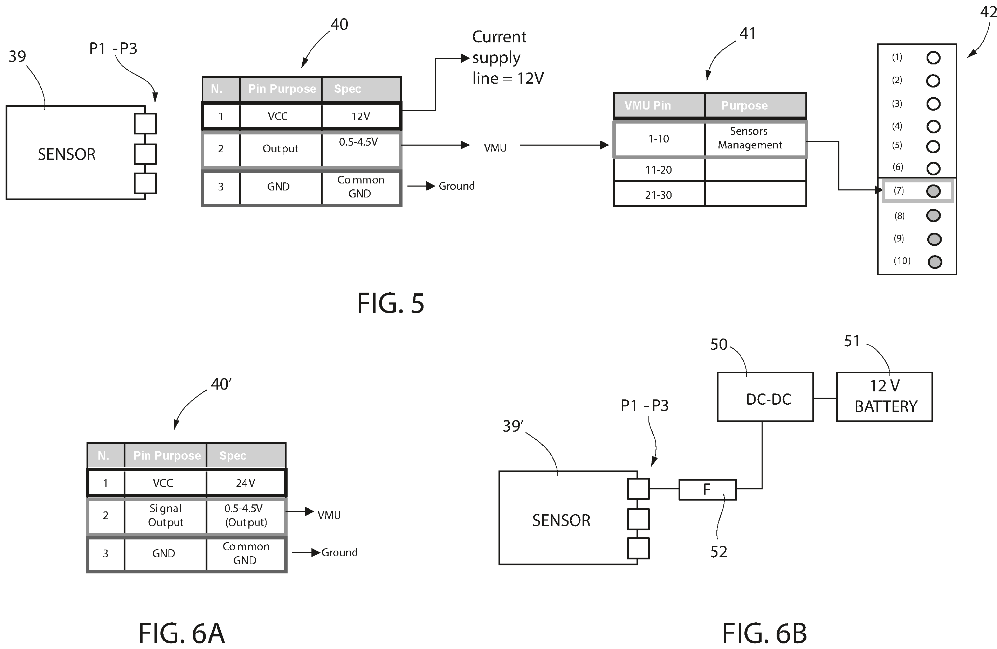

Figure 5 shows, by way of example, a portion of data sheet 40 of a sensor 39 which is to be integrated into the electrical wiring diagram (for example, the wiring diagram 20 in Figure 3A).

For example, the portion 40 of data sheet can be incorporated within a dedicated file, for example a pdf file or any other type of file, and the connection algorithm can be configured to recognize and extract the portion 40 and the information contained therein. In such case, the extraction can be based on software libraries such as for example pdfPlumber, BeautifulSoup or other known suitably configured tools.

In such regard, the connection algorithm can comprise a dedicated module, for example configured to execute an artificial intelligence algorithm for recognizing text known per se and suitably trained.

In detail, the connection algorithm can be trained in a supervised manner by a user or operator based on training data sheets, in order to recognize and extract the electrical specifications of the component to be integrated from the respective data sheet.

For example, with reference to the example in Figure 5, the electrical specifications of the sensor extracted from the portion of data sheet 40 comprise:
- list of pins P1-P3 of the sensor;
- for each pin, the respective function, i.e. the pin 1 corresponds to the input pin of the supply voltage VCC, the pin 2 corresponds to the output pin of the sensor that provides the output signal 'Output' of the sensor, the pin 3 corresponds to the pin to be connected to the ground; and
- the specifications associated with each pin, i.e. the value of the supply voltage (equal to 12 V in the example in Figure 5), the operating voltage of the output signal, and to which ground node to connect the sensor.

The data extracted at step S10 by the connection algorithm can be stored and/or provided at the output to a user. This can enable the verification by the user of the extracted electrical specifications.

Again with reference to Figure 4, the connection algorithm is configured to pair (step S11) the new component to be integrated with one or more of the components already integrated into the current electrical wiring diagram.

In detail, for each pin of the component to be integrated, a respective pin of one or more of the already integrated components to which to be connected is identified.

The pairing of step S11 is based both on the electrical specifications extracted at step S10 and on the electrical specifications of the current electrical wiring diagram.

Figure 5 shows an exemplifying representation of the current connection data, indicated by the portions 41 and 42, relative to a vehicle management unit (VMU) already integrated into the current electrical wiring diagram.

In detail, the portion of the current connection data indicated by reference numeral 41 indicates that the function of the pins from 1 to 10 of the VMU is associated with the management of the sensors integrated into the vehicle. The portion of the current connection data indicated by reference numeral 42 indicates that, of such ten pins, the pins from 1 to 6 are occupied for the interconnection of further sensors already integrated into the vehicle (and here not shown), whereas the pins from 7 to 10 are free.

Then, based on the current connection data 41, 42, at step S11 the connection algorithm identifies the connection between the pin P2 of the sensor to be integrated and one of the pins from 7 to 10 of the VMU. For example, the algorithm can be configured or trained to select the first free pin; i.e., in the example shown in Figure 5, the pin 7.

Furthermore, the connection algorithm identifies that the supply pin of the sensor (pin P1) is to be connected to a supply source of the vehicle and the ground pin (pin P3) to the common ground of the vehicle. For example, with reference to the example in Figure 3A, the supply pin of the sensor can be connected to the battery 25.

According to a preferred embodiment, the connection algorithm can further be configured to verify (step S12) an electrical compatibility between the new component to be integrated and the respective connection component identified at step S11; in particular, an electrical compatibility between each pin of the electrical component to be integrated and each pin of the destination electrical component.

In detail, at step S12, the algorithm can be configured to verify one or more rules of the set of connection rules previously discussed.

For each pin of the new component to be integrated, the connection algorithm can verify that the working voltage and/or the working current of the new component to be integrated is compatible with a working voltage and/or working current of the component to which it will be connected.

In response to the verification of compatibility, the algorithm can be configured to add (step S13) further electrical components to the electrical diagram, so as to compensate for the possible incompatibilities identified at step S12.

For explanation purposes, Figure 6A shows a portion 40' of the data sheet of a sensor 39' (Figure 6B) similar to the portion 40 discussed with reference to Figure 5.

Unlike the portion 40 in Figure 5, the supply voltage required by the new sensor 39' to be integrated is of 24 V. However, the connection data indicative of the current electrical wiring diagram indicate that the supply line currently present in the electrical diagram is of 12 V.

In such case, at step S12 the connection algorithm identifies an electrical incompatibility, as the supply voltage currently present in the electrical diagram would not be sufficient to correctly supply the sensor 39'.

Thus, in response, at step S13, the connection algorithm adds one or more electrical components to compensate for such voltage incompatibility.

In this case, with reference to Figure 6B, the connection algorithm can add a voltage converter, for example a DC-DC converter 50, between a battery 51 and the pin P1 of the sensor 39', configured to receive at the input the supply voltage of 12 V and provide at the output a voltage of 24 V.

Furthermore, the connection algorithm can also add a fuse 52 in series between the battery 51 and the sensor 39', suitably dimensioned as a function of a maximum working current of the sensor 39'.

In such regard, the connection algorithm can comprise one or more modules, configured to execute an artificial intelligence algorithm suitably trained to identify and possibly compensate for the electrical incompatibilities discussed above.

The artificial intelligence algorithm can be trained in a supervised manner by a user, from known examples associated with cases where it is necessary to compensate for the electrical incompatibility between two components.

The advantages of the present invention clearly emerge in light of what discussed above.

The method described above, in fact, allows automating the manufacturing of the electrical wiring diagram of a vehicle, in an optimized and efficient manner.

Furthermore, the verification of possible electrical incompatibilities between the new component to be integrated and the already integrated components and the corresponding compensation of the detected electrical incompatibilities further allow improving the efficiency of the present method.

In practice, summarizing what described above, a connection algorithm is provided configured to create electrical connections between a component to be integrated and one or more electrical components already integrated into the electrical diagram. The connection algorithm can be configured to determine the electrical connections of the component to be integrated in a deterministic manner, by means of one or more deterministic software modules, by processing the technical information of the component data extrapolated from the technical documents (e.g. one or more data sheets) of the component to be integrated. The electrical connections thereby determined are drawn on chart representing the updated electrical wiring diagram of the vehicle.

Additionally, the connection algorithm can be configured to utilize one or more artificial intelligence algorithms in case specific conditions are detected, in particular conditions of electrical incompatibility between the component to be integrated and the already integrated components such as for example:
- voltage difference in the wiring between the vehicle line and the supply necessary for the operation of the new electrical component to be integrated;
- the need to insert fuses, suitably dimensioned in terms of maximum current, between the component to be integrated and the already integrated components; and/or
- other similar conditions which need the insertion of additional electrical components for the correct operation of the component to be integrated and of the entire vehicle.

In the case of artificial intelligence algorithms, such algorithms are suitably trained from a training database exemplifying of such specific conditions, for example of electrical incompatibility, which require the insertion of additional electrical components; for example, the training data can be exemplifying of one or more specific circumstances of incompatibility in which a respective fuse (each with respective dimensioning in terms of current) is to be inserted, one or more specific circumstances of incompatibility in which a respective voltage converter is to be inserted, etc.

The fact that the electrical wiring diagram can be the electrical wiring diagram of an electrical system to be incorporated into a vehicle causes the present method to allow simplifying and making efficient also the design of the electrical system (and thus also of the vehicle), with consequent reduction in design time and costs.

In detail, the method described herein for determining the electrical wiring diagram of a vehicle is utilized for manufacturing the electrical system of the vehicle. In particular, the electrical wiring diagram is determined according to the present method and the electrical system is manufactured according to the determined electrical wiring diagram.

In practice, the method provides for manufacturing an electrical system having the determined electrical wiring diagram.

The manufacturing of the electrical system can be performed according to manufacturing steps known per se, which can vary for example depending on the specific type of electrical system and vehicle, and thus not described herein.

Optionally, the electrical wiring diagram determined by means of the present method can be utilized also for manufacturing the vehicle comprising the electrical system.

In such case, the method also comprises manufacturing the vehicle, according to manufacturing steps known per se and thus not described herein, incorporating an electrical system having the determined electrical wiring diagram.

Finally, it is clear that modifications and variations can be made to the system and method according to the present invention which anyway do not depart from the scope of protection defined by the claims.

For example, the electrical wiring diagrams can comprise electrical components different from those utilized in an exemplifying manner in the description above, depending on the specific application and type of vehicle. Furthermore, the individual electrical components can have function, number of pins and sub-components different from what shown and described, depending on the specific application and type of vehicle.

For example, the embodiments shown and described can be combined with one another to provide further solutions.

## Claims

1. A method implemented by a processing system (1) for determining an electrical wiring diagram (20') of a vehicle, the method comprising:
- receiving (S1) component data indicative of one or more electrical specifications of a first electrical component (30, 31, 39, 39') to be integrated into a current electrical wiring diagram (20) of the vehicle; and
- executing (S2), from the component data and current connection data indicative of the current electrical wiring diagram (20), a connection algorithm that is configured to determine an electrical wiring diagram (20') of the vehicle comprising the first electrical component (30, 31, 39, 39') integrated into the current electrical wiring diagram (20) based on electrical specifications of the first electrical component and the current electrical wiring diagram (20).

2. The method according to the preceding claim, wherein the component data comprise one or more data sheets including the one or more electrical specifications of the first electrical component, wherein executing the connection algorithm comprises extracting (S10) the one or more electrical specifications of the first electrical component from the one or more data sheets.

3. The method according to claim 1 or 2, wherein the one or more electrical specifications of the first electrical component comprise one or more of the following specifications of the first electrical component: list of connection pins (32, P1-P3); function of the connection pins; supply voltage; maximum current.

4. The method according to any one of the preceding claims, wherein executing the connection algorithm comprises determining a pairing (S11) between each connection pin (P1-P3) of the first electrical component and at least one connection pin of at least one electrical component (21-24) of the current electrical wiring diagram (20), based on the current connection data and the component data.

5. The method according to any one of the preceding claims, wherein the current connection data are indicative of the interconnections (26) of one or more electrical components (21-24) integrated into the current electrical wiring diagram (20).

6. The method according to any one of the preceding claims, wherein the first electrical component has one or more connection pins (P1-P3), wherein the connection algorithm is configured to provide output data indicative of the electrical wiring diagram (20') integrating the first electrical component, the output data being indicative, for each connection pin of the first electrical component, of at least one of: type of connector; destination pin of at least one of the electrical components (21-24) integrated into the current electrical wiring diagram; and one or more characteristics of the connection line between the connection pin and the respective destination pin.

7. The method according to any one of the preceding claims, further comprising updating the current electrical wiring diagram (20) with the electrical wiring diagram (20') determined by the connection algorithm and integrating the first electrical component.

8. The method according to any one of the preceding claims, further comprising providing, to a user interface (4), a representation, for example a graphical representation, of the electrical wiring diagram (20) determined by the connection algorithm.

9. The method according to any one of the preceding claims, wherein executing the connection algorithm further comprises:
verifying (S12) an electrical compatibility between the first electrical component (39') and one or more electrical components (51) of the current electrical wiring diagram (20), based on a comparison between the electrical specifications of the first electrical component and the electrical specifications of the one or more electrical components of the current electrical wiring diagram; and
in response to the detection of an electrical incompatibility between the first electrical component and one or more electrical components of the current electrical wiring diagram, adding to the current electrical wiring diagram one or more additional electrical components (50, 52) configured to compensate for the detected electrical incompatibility.

10. The method according to the preceding claim, wherein verifying the electrical compatibility comprises verifying the compatibility of at least one of working voltage and working current of the first electrical component to be integrated (39') with at least one of working voltage and working current of the one or more electrical components (51) integrated into the current electrical wiring diagram to be paired to the first electrical component,
wherein, in response to the detection of an incompatibility of at least one of working voltage and working current, the one or more additional electrical components (50, 52) are configured to compensate for the incompatibility of at least one of working voltage and working current.

11. The method according to any one of the preceding claims, wherein the electrical wiring diagram (20') is the electrical wiring diagram of an electrical system to be incorporated into the vehicle.

12. A processing system (1) configured to perform a method for determining an electrical wiring diagram (20') of a vehicle, according to any one of the preceding claims.

13. A computer program comprising instructions which, when executed by a processing system (1), cause the processing system to perform the method according to any one of claims 1-11.

14. The method comprising:
determining an electrical wiring diagram of a vehicle according to any one of claims 1-11; and
manufacturing an electrical system of the vehicle according to the determined electrical wiring diagram.
